# EUROPEAN PATENT APPLICATION

(11) **EP 1 672 620 A2**
(43) Date of publication of application: **21.06.2006**
(21) Application number: 05027399.4
(22) Date of filing: 14.12.2005
(51) Int. Cl.: G11B 5/48, G11B 21/22

(54) **Head parking ramp for hard disk drive**

(30) Priority: 18.12.2004 KR 2004108398
(71) Applicant: Samsung Electronics Co., Ltd., Suwon-si, Gyeonggi-Do (KR)
(72) Inventor: Kim, Do-wan, Gisanri Taeaneub Hwaseong-si Gyeonggi-do (KR); Lee, Chul-woo, Bundang-gu Seongnam-si Gyeonggi-do (KR); Jeong, Ki-tag, Taean-sub Hwaseong-si Gyeonggi-do (KR); Kang, Tae-sik, Suwon-si Gyeonggi-do (KR)
(74) Representative: Grünecker, Kinkeldey, Stockmair & Schwanhäusser Anwaltssozietät

(57) **Abstract**

A head parking ramp (130) for a hard disk drive (HDD). The head parking ramp is designed to park a read/write head (119) off a disk of the HDD when the disk stops rotating. The head parking ramp includes a fixed part (131) fixed to a base member (110), a support part (132) having a support surface and supporting an end-tab (127), and a flexure limiter (134) limiting a vertical movement of a flexure (124) due to an external shock. Among both longitudinal ends of each of top and bottom surfaces of the flexure limiter facing the flexure, first inclined surfaces (134a) are formed on at least the ends opposite to the disk. Accordingly, even though the flexure contacts the flexure limiter when an actuator is assembled with the ramp, the flexure is prevented from being deformed.

## Description

### - BACKGROUND OF THE INVENTION

### 1. Field of the Invention

The present invention relates to a hard disk drive, and more particularly, to a head parking ramp on which a read/write head is stably parked when a hard disk drive stops operating.

### 2. Description of the Related Art

Hard disk drives (HDDs), which store information on computers, reproduce data stored in a disk or record data on the disk using a read/write head. In the HDDs, the head functions by being moved to a desired position by an actuator while being elevated above a recording surface of the rotating disk at a predetermined height.

When the HDD does not operate, that is, when the disk stops rotating, the head is parked off the recording surface of the disk to prevent a collision with the recording surface of the disk. Such head parking systems can be classified into a contact start stop (CSS) system and a ramp loading system. In the CSS system, a parking zone where data is not recorded is formed on an inner peripheral side of the disk and the head is parked in contact with the parking zone. In the ramp loading system, the head is parked on a ramp that is installed outside of the disk.

In the CSS type head parking system, since the read/write head is parked in contact with the parking zone formed on the inner peripheral side of the disk, if an external shock is applied when the HDD has stopped operating, that is, when the disk is not rotating, the disk and the head vibrate due to the shock, and thus collide with each other. Accordingly, the head is damaged, thereby decreasing the read/write performance of the head.

Since damage to the head due to a collision between the disk and the head can be prevented by parking the head on a ramp disposed outside of the disk when the HDD is not operating, the ramp loading type head parking system is widely employed in a mobile HDD using a disk, for example, a disk with a diameter of 2.5", 1 ", or 0.85".

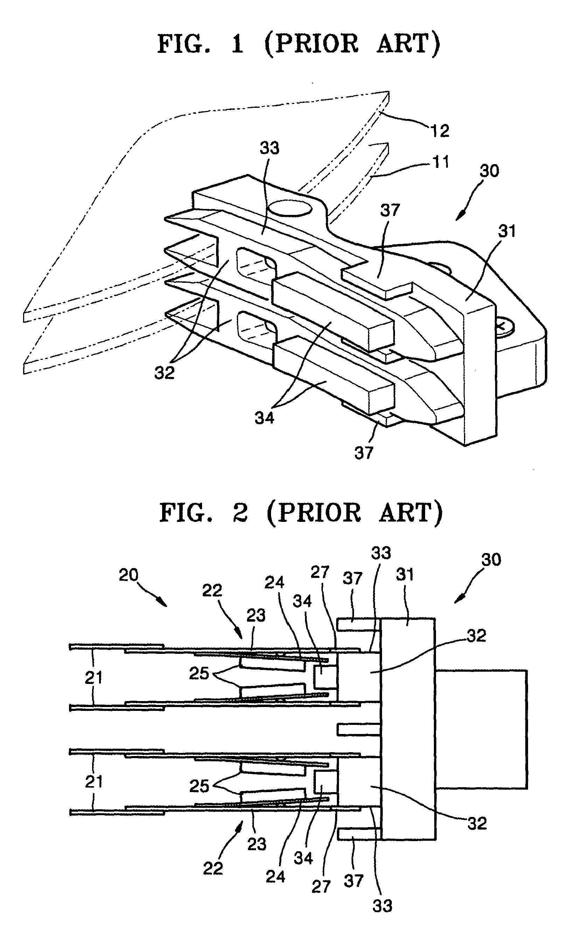

FIG. 1 is a perspective view of a conventional head parking ramp. FIG. 2 is a side view illustrating a state where a head is parked on the conventional head parking ramp shown in FIG. 1.

Referring to FIGS. 1 and 2, an HDD includes one or more data storage disks 11 and 12, and an actuator 20 that moves a slider 25 having a read/write head for data reproduction and recording to desired positions on the respective disks 11 and 12.

The actuator 20 includes a swing arm 21, a suspension assembly 22 installed at one end of the swing arm 21 and elastically biasing the slider 25 with the head thereon toward surfaces of the respective disks 11 and 12, and a voice coil motor (VCM) rotating the swing arm 21. The suspension assembly 22 includes a load beam 23 coupled to the one end of the swing arm 21 and a flexure 24 having a rear end attached to the load beam 23. The slider 25 is attached to and supported by the flexure 24.

When the HDD is not operating, that is, the disks 11 and 12 stop rotating, the head is parked off recording surfaces of the respective disks 11 and 12 so that the head can be prevented from colliding with the recording surfaces of the disks 11 and 12. To this end, a ramp 30 is installed outside of the disks 11 and 12, and an end-tab 27 extends by a predetermined length from a front end of the load beam 23 to be supported by the ramp 30.

The ramp 30 includes a fixed part 31 fixed to a base member (not shown) of the HDD, and a support part 32 having a support surface 33 that supports the end-tab 27. The end of the support surface 33 at the side of the disks 11 and 12 is inclined such that the end-tab 27 can be smoothly loaded and unloaded.

If an external shock is applied to the HDD, the suspension assembly 22 vertically shakes, and accordingly adjacent sliders 25 facing each other collide with each other, resulting in a damage to the head mounted on each of the sliders 25. To solve this problem, a flexure limiter 34 for limiting a vertical movement of the flexure 24 and an end-tab limiter 37 for limiting a vertical movement of the end-tab 27 are provided on the ramp 30.

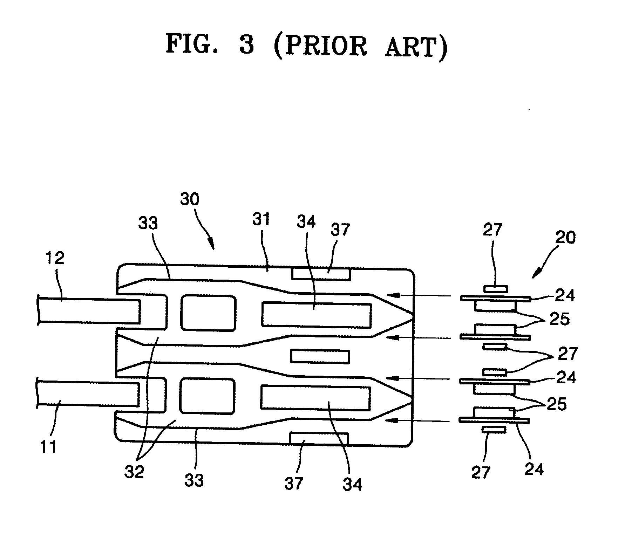

FIG. 3 is a front view for explaining problems of the conventional head parking ramp shown in FIG. 1.

Referring to FIG. 3, the actuator 20 is assembled with the ramp 30 in a state where the distance between the adjacent sliders 25 is widened using a shipping comb (not shown) to prevent the sliders 25 from contacting each other. However, when the shipping comb exceeds a tolerance or the shipping comb is not properly coupled to the actuator 20, the distance between the sliders 25 varies and the flexure 24 and the end-tab 27 deviate from their positions.

In this state, if the actuator 20 is assembled with the ramp 30, the flexure 24 may collide with a side surface of the flexure limiter 34. In particular, since the conventional flexure limiter 34 has a vertical side surface, the flexure 24 may be excessively distorted during the assembly process. The excessive distortion of the flexure 24 causes the flexure 24 to be deformed. Such problems may also take place between the end-tab 27 of the actuator 20 and the end-tab limiter 37 of the ramp 30.

The deformation of the flexure 24 and the end-tab 27 due to the structural problem of the ramp 30 may greatly affect the load/unload characteristics of the slider 25, and the slider 25 may be unstable when landing or taking off the disks 11 and 12. As a result, a scratch or thermal asperity may be present on the surface of the disks 11 and 12 or the head may be severely damaged.

### SUMMARY OF THE INVENTION

Additional aspects and/or advantages of the invention will be set forth in part in the description which follows and, in part, will be apparent from the description, or may be learned by practice of the invention.

The present invention provides a head parking ramp for a head disk drive, which can prevent a flexure from being deformed although the flexure contacts a flexure limiter when an actuator is assembled with a ramp.

According to an aspect of the present invention, there is provided a head parking ramp for parking a read/write head, which is mounted on a slider of an actuator, off a disk of a hard disk drive when the disk stops rotating. The actuator includes a swing arm pivotally installed on a base member, a load beam coupled to one end of the swing arm, a flexure attached to the load beam and supporting the slider, and an end-tab extending from a front end of the load beam. The head parking ramp includes: a fixed part fixed to the base member; a support part having a support surface that supports the end-tab; and a flexure limiter limiting a vertical movement of the flexure due to an external shock, where among both longitudinal ends of each of top and bottom surfaces of the flexure limiter facing the flexure, first inclined surfaces are formed on at least the ends opposite to the disks.

The support part may protrude from the fixed part, and the flexure limiter may protrude from the support part.

The first inclined surfaces may be inclined at an angle of approximately 30 to 60° with respect to an extension from each of the top and bottom surfaces of the flexure limiter.

The first inclined surfaces may be formed on both the longitudinal ends of each of the top and bottom surfaces of the flexure limiter.

The head parking ramp may further include an end-tab limiter having a surface facing the support surface of the support part and limiting a vertical movement of the end-tab due to an external shock, where among both longitudinal ends of the surface of the end-tab limiter facing the support part, a second inclined surface is formed on at least the end opposite to the disks.

The end-tab limiter may protrude from the fixed part.

The second inclined surface may be inclined at an angle of approximately 30 to 60° with respect to an extension from the surface of the end-tab limiter facing the support part.

The second inclined surface may be formed on both the longitudinal ends of the surface of the end-tab limiter facing the support part.

Accordingly, even though the flexure contacts the flexure limiter when the actuator is assembled with the ramp, the load/unload characteristics and taking off/landing characteristics of the slider can be prevented from being deteriorated.

### BRIEF DESCRIPTION OF THE DRAWINGS

The above and other features and advantages of the present invention will become more apparent by describing in detail exemplary embodiments thereof with reference to the attached drawings in which:
FIG. 1 is a perspective view of a conventional head parking ramp;
FIG. 2 is a side view illustrating a state where a head is parked on the conventional head parking ramp shown in FIG. 1;
FIG. 3 is a front view for explaining problems of the conventional head parking ramp shown in FIG. 1;
FIG. 4 is a plan view of a hard disk drive (HDD) provided with a head parking ramp according to an embodiment of the present invention;
FIG. 5 is a perspective view of an actuator and the head parking ramp shown in FIG. 4; and
FIG. 6 is a front view for explaining a process of assembling the actuator with the head parking ramp shown in FIG. 5.

### DETAILED DESCRIPTION OF THE PREFERRED EMBODIMENTS

A head parking ramp for a hard disk drive (HDD) according to the present invention will now be described more fully with reference to the accompanying drawings, in which preferred embodiments of the invention are shown. The same elements are given the same reference numerals throughout the drawings.

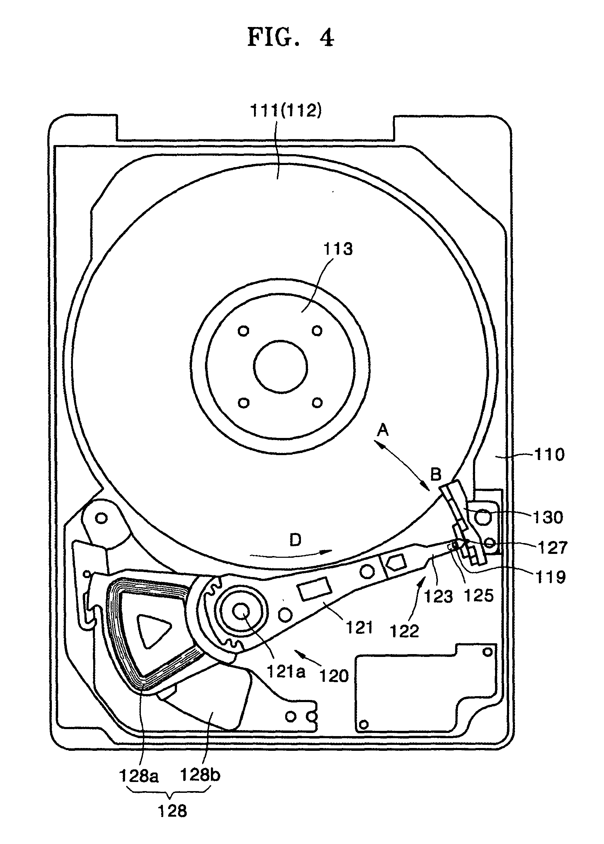

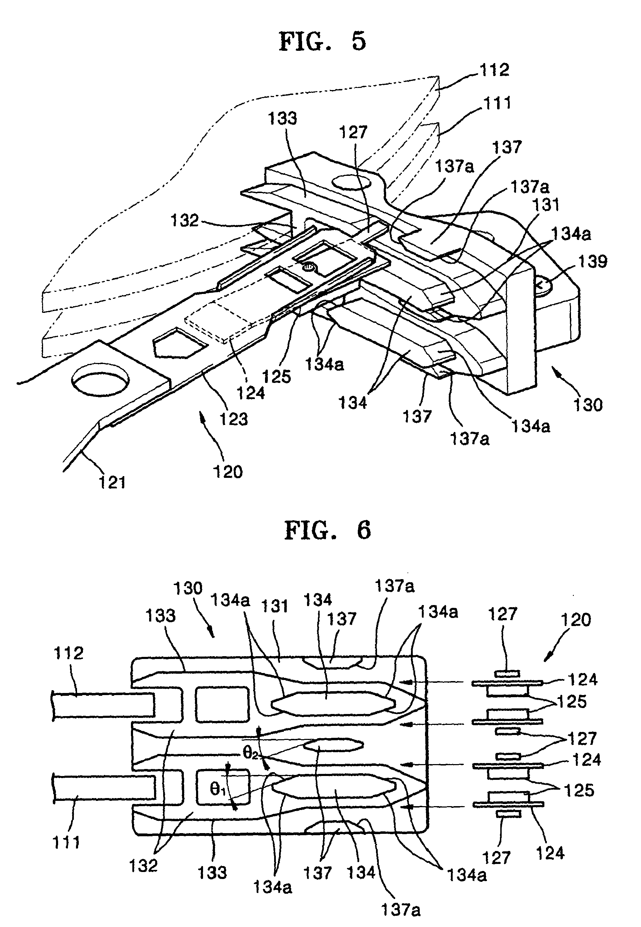

FIG. 4 is a plan view of an HDD provided with a head parking ramp according to an embodiment of the present invention. FIG. 5 is a perspective view of an actuator and the head parking ramp shown in FIG. 4.

Referring to FIGS. 4 and 5, the HDD includes a spindle motor 113 installed on a base member 110, one or more data storage disks 111 and 112 mounted on the spindle motor 113, an actuator 120 moving a read/write head 119 for data reproduction and recording to desired positions on the respective disks 111 and 112, and a ramp 130 on which the read/write head is parked when the disks 111 and 112 stop rotating.

The actuator 120 includes a swing arm 121 pivotally coupled to a pivot bearing 121a that is installed on the base member 110, a suspension assembly 122 installed at one end of the swing arm 121 and elastically biasing a slider 125, on which the head 119 is mounted, toward surfaces of the respective disks 111 and 112, and a voice coil motor (VCM) 128 rotating the swing arm 121.

The suspension assembly 122 includes a load beam 123 coupled to the one end of the swing arm 121, a flexure 124 attached to a surface of the load beam 123 facing the respective disks 111 and 112 and supporting the slider 125 on which the head 119 is mounted, and an end-tab 127 extending a predetermined length from a front end of the load beam 123. In detail, a rear end of the flexure 124 is welded to the surface of the load beam 123 facing the disks 111 and 112. A front end of the flexure 124 extends along the front end of the load beam 123 and is freely movable to some degree. The end-tab 127 for parking the read/write head 119 on the ramp 130 is supported by contact with a support surface 133 of the ramp 130 when the HDD stops operating as described later.

The VCM 128 includes a VCM coil 128a coupled to the other end of the swing arm 121 and a magnet 128b facing the VCM coil 128a. The VCM 128 is controlled by a servo control system, and rotates the swing arm 121 in a direction according to Fleming's Left Hand Rule due to an interaction between current input to the VCM coil 128a and a magnetic field formed by the magnet 128b.

Specifically, when the HDD is turned on and the disks 111 and 112 begin to rotate in a direction marked by arrow D, the VCM 128 rotates the swing arm 121 counterclockwise (in a direction marked by arrow A) to move the slider 125 with the read/write head 119 thereon to recording surfaces of the respective disks 111 and 112. The slider 125 is lifted to a predetermined height from the surfaces of the disks 111 and 112 due to a lifting force generated by the rotating disks 111 and 112, and the head 119 mounted on the slider 125 reproduces data from or records data on to the recording surfaces of the respective disks 111 and 112.

When the HDD is turned off and the disks 111 and 112 stop rotating, the VCM 128 rotates the swing arm 121 clockwise (in a direction marked by arrow B) to park the head 119 off the recording surfaces of the respective disks 111 and 112, thereby preventing the head 119 from colliding with the recording surfaces of the disks 111 and 112. To this end, the head parking ramp 130 according to the present invention is installed outside the disks 111 and 112 and the end-tab 127 is provided on the front end of the load beam 124 of the suspension assembly 122.

The head parking ramp 130 includes a fixed part 131 fixed to the base member 110 of the HDD, a support part 132 supporting the end-tab 127 of the actuator 120, and a flexure limiter 134 limiting the vertical movement of the flexure 124 of the actuator 120.

The fixed part 131 is fixed to the base member 110 of the HDD using a fixing screw 139 or other means.

The support part 132 protrudes from the fixed part 131 toward the actuator 120, and one longitudinal end, that is, one end of the support part 132 at the disk side, overlaps top and bottom surfaces of an outer edge of each of the disks 111 and 112. The support part 132 has the support surface 133 that contacts and supports the end-tab 127 when the disks 111 and 112 stop rotating. An end of the support surface 133 at the disk side is inclined such that the loading/unloading of the end-tab 127 can be smoothly performed.

The flexure limiter 134 protrudes from the support part 132 toward the actuator 120 and has top and bottom surfaces each facing the flexure 124. The flexure limiter 134 limits the vertical movement of the flexure 124 when the flexure 124 vertically moves due to an external shock, to prevent adjacent sliders 125 facing each other from colliding with each other.

First inclined surfaces 134a are formed at both longitudinal ends of each of the top and bottom surfaces of the flexure limiter 134. The first inclined surfaces 134a may have an inclination θ₁ of approximately 30 to 60° with respect to an extension from each of the top and bottom surfaces of the flexure limiter 134. Meanwhile, the first inclined surfaces 134a may be formed only on the ends of the flexure limiter 134 opposite to the disks 111 and 112.

The first inclined surfaces 134a formed on the flexure limiter 134 smoothly guide the flexure 124 to a set position when the actuator 120 is assembled with the ramp 130, which will be explained later.

On the other hand, the flexure limiter 134 having this shape may be integrally formed with the fixed part 131 and the support part 132 through plastic injection moulding. Accordingly, since the ramp 130 is formed as a single body, it is easy to handle or assemble the ramp 130.

The ramp 130 according to the present invention may further include an end-tab limiter 137 limiting the vertical movement of the end-tab 127 of the actuator 120.

The end-tab limiter 137 protrudes from the fixed part 131 toward the actuator 120, and at least one of the top and bottom surfaces of the end-tab limiter 137 faces the support surface 133 of the support part 132. Accordingly, when the head is parked, the end-tab 127 is disposed between the support surface 133 of the support part 132 and the surface of the end-tab limiter 137 facing the support part 132. Consequently, a vertical movement of the end-tab 127 due to an external shock can be limited by the end-tab limiter 137.

Second inclined surfaces 137a may be formed on both longitudinal ends of the surface of the end-tab limiter 137 facing the support part 132. The second inclined surfaces 137a may have an inclination θ₂ of approximately 30 to 60° with respect to an extension from the surface of the end-tab limiter 137 facing the support part 132. Meanwhile, the second inclined surfaces 137a may be formed only on the end of the end-tab limiter 137 opposite to the disks 111 and 112.

The second inclined surfaces 137a formed on the end-tab limiter 137 smoothly guide the end-tab 127 to a set position when the actuator 120 is assembled with the ramp 130, which will be explained later.

On the other side, the end-tab limiter 137 having this shape may also be integrally formed with the ramp 130 through plastic injection molding.

FIG. 6 is a front view for explaining a process of assembling the actuator with the head parking ramp shown in FIG. 5.

Referring to FIG. 6, the actuator 120 is assembled with the ramp 130 in a state where a distance of the adjacent sliders 125 is widened using a shipping comb (not shown) so that the sliders 125 can be prevented from contacting each other. However, if the shipping comb exceeds a tolerance or the shipping comb is not properly coupled to the actuator 120, the distance between the sliders 125 is inconsistent and the flexure 124 and the end-tab 127 deviate from their positions.

In this state, if the actuator 120 is assembled with the ramp 130, the flexure 124 may collide with a side surface of the flexure limiter 134 of the ramp 130. In this case, since the first inclined surfaces 134a are formed on both the ends of the flexure limiter 134 in the ramp 130 according to the present invention, the flexure 124 contacts the first inclined surfaces 134a of the flexure limiter 134. Accordingly, the flexure 124 contacting the first inclined surfaces 134a can smoothly move along the first inclined surfaces 134a. In this way, the first inclined surfaces 134a formed on the flexure limiter 134 guide the flexure 124, thereby minimizing distortion and deformation of the flexure 124.

In the meantime, if the end-tab 127 contacts the end-tab limiter 137, the second inclined surfaces 137a formed on the end-tab limiter 137 smoothly guide the end-tab 127 to prevent deformation of the end-tab 127 in the same manner as described for the first inclined surfaces 134a.

As described above, even though the flexure contacts the flexure limiter when the actuator is assembled with the ramp, the deformation of the flexure is prevented by the first inclined surfaces formed on the flexure limiter. Even when the end-tab contacts the end-tab limiter, the deformation of the end-tab can be prevented by virtue of the second inclined surfaces formed on the end-tab limiter.

Therefore, deterioration of the load/unload characteristics and taking off/landing characteristics of the slider due to the deformation of the flexure and the end-tab can be avoided.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A head parking ramp (130) for parking a read/write head (119), which is mounted on a slider (125) of an actuator (120), off a disc (111, 112) of a hard disc drive when the disc stops rotating, the actuator (120) including a swing arm (121) pivotally installed on a base member (110), a load beam (123) coupled to one end of the swing arm, a flexure (124) attached to the load beam and supporting the slider (125), and an end-tap (127) extending from a front end of the load beam, the head parking ramp (130) comprising:
a fixed part (131) fixed to the base member (110);
a support part (132) having a support surface (133) that supports the end-tap (127), and
a flexure limiter (134) limiting vertical movement of the flexure (124) due to an external shock, **characterized in that** first inclined surfaces (134a) are formed on at least one longitudinal end at top and bottom surfaces of the flexure limiter (134) facing the flexure (124).

2. The head parking ramp of claim 1, wherein the support part (132) protrudes from the fixed part (131), and the flexure limiter (134) protrudes from the support part (132).

3. The head parking ramp of claim 1, wherein the first inclined surfaces (134a) are inclined at an angle of approximately 30 to 60° with respect to an extension from each of the top and bottom surfaces of the flexure limiter (134).

4. The head parking ramp of claim 1, wherein the first inclined surfaces (134a) are formed on both the longitudinal ends of the flexure limiter (134).

5. The head parking ramp of claim 1, **characterized by** further comprising an end-tap limiter (137) having a surface facing the support surface (133) of the support part (132) and limiting vertical movement of the end-tap (127) due to an external shock, wherein a second inclined surface (137a) is formed at least at one longitudinal end at a surface of the end-tap limiter (137) facing the support part and opposite to the disc.

6. The head parking ramp of claim 5, wherein the end-tab limiter (137) protrudes from the fixed part (131).

7. The head parking ramp of claim 5, wherein the second inclined surface (137a) is inclined at an angle of approximately 30 to 60° with respect to an extension from the surface of the end-tab limiter (137) facing the support part (132).

8. The head parking ramp of claim 5, wherein the second inclined surface (137a) is formed on both the longitudinal ends of the surface of the end-tab limiter (137) facing the support part (132).

9. The head parking ramp of claim 1, wherein the fixed part (131) is fixed to the base member (110) using a fixing screw (139).

10. A hard disk drive (HDD), comprising:
a base member (110);
a spindle motor (113) installed on the base member (110);
at least one data storage disk (111, 112) mounted on the spindle motor;
an actuator (120) moving a read/write head (113); and
a ramp (130) on which the read/write head is parked when the disk is in a stopped position, wherein the ramp comprises:
a fixed part (131) fixed to the base member (110),
a support part (132) supporting an end-tab (127) of the actuator (120),
a flexure limiter (134) limiting the vertical movement of the read/write head (119), **characterized in that** the flexure limiter includes first inclined surfaces (134a) formed at least at one longitudinal end of each of the top and bottom surfaces of the flexure limiter.

11. A hard disc drive of claim 10, wherein the first inclined surfaces (134a) have an inclination of approximately 30° to 60°.

12. The hard disc drive of claim 10, wherein the fixed part (131) is fixed to the base member (110) using a fixing screw (139).

13. The hard disk drive of claim 10, wherein the support part (132) protrudes from the fixed part (131) toward the actuator (120) and one end of the support part (132) overlaps top and bottom surfaces of an outer edge of the disk (111, 112).

14. The hard disk drive of claim 10, wherein the support part (132) comprises a support surface that contacts and supports the end-tab (127), wherein an end of the support surface is inclined.

15. The hard disk drive of claim 10, wherein the flexure limiter (134) protrudes from the support part (132) toward the actuator (120) and has top and bottom surfaces each facing a flexure (124) of said actuator.

16. The hard disk drive of claim 10, wherein the ramp (130) further comprises an end-tab limiter (137) limiting the vertical movement of the end-tab of the actuator (120).
